Europäisches Patentamt

European Patent Office

Office européen des brevets

(11) Veröffentlichungsnummer: **0 408 985 A2**

# (12) EUROPÄISCHE PATENTANMELDUNG

(21) Anmeldenummer: 90112746.4

(22) Anmeldetag: 04.07.90

(51) Int. Cl.⁵: **H02K 7/14**, H02K 7/116,
H02K 23/66, H02K 7/10

(30) Priorität: 15.07.89 DE 3923421
14.02.90 DE 4004464
14.02.90 DE 4004463
22.06.90 DE 4019894

(43) Veröffentlichungstag der Anmeldung:
23.01.91 Patentblatt 91/04

(84) Benannte Vertragsstaaten:
AT BE CH DE DK ES FR GB GR IT LI LU NL SE

(71) Anmelder: CEKA ELEKTROWERKZEUGE AG +
Co.KG
Ebnater Strasse
CH-9630 Wattwil(CH)

(72) Erfinder: **Kress, Willy**
**Breitenwasen 21**
**D-7457 Bisingen(DE)**
Erfinder: **Breitenmoser, Armin**
**Ebnater Strasse 185**
**CH-9631 Ulisbach(CH)**

(74) Vertreter: **Otte, Peter, Dipl.-Ing.**
**Tiroler Strasse 15**
**D-7250 Leonberg(DE)**

(54) Elektrohandwerkzeug.

(57) Bei einem Elektrohandwerkzeug, welches insbesondere als Schraüber, Handbohrmaschine u. dgl. verwendet werden kann, ist der Antriebsmotor innerhalb eines als Pistolenhandgriff ausgebildeten ersten größeren Gehäuseteils angeordnet. Von diesem Gehäuseteil geht horizontal ein schmalerer Ansatz ab als zweites Gehäuseteil für die Lagerung der Werkzeugspindel, die über ein Umlenkgetriebe von dem Ausgangswellenstummel des Antriebsmotors angetrieben ist.

EP 0 408 985 A2

## ELEKTROHANDWERKZEUG

### Stand der Technik

Die Erfindung geht aus von einem Elektrohandwerkzeug nach dem Oberbegriff des Anspruchs 1.

Elektrohandwerkzeuge mit dem üblichen Pistolenhandgriffgehäuse sind in vielfältiger Form bekannt (z. B. DE-PS 28 17 814 oder DE-OS 31 03 286); solche Geräte werden umfassend zum Schrauben, Bohren, Schlagbohren u. dgl. eingesetzt und sind stets so aufgebaut, daß an den hinteren Teil eines sich in der axialen Richtung der Werkzeugspindel erstreckenden Hauptgehäuses ein etwa im rechten Winkel oder gering stumpfwinklig verlaufender Handgriff angesetzt ist, so daß das ganze Gehäuse eines solchen Elektrohandwerkzeugs etwa eine pistolenartige Form aufweist.

Dabei befinden sich der Antriebsmotor, ein gegebenenfalls vorhandenes Getriebe, Getriebeumschaltmittel und die Werkzeugausgangsspindel im normalerweise tonnenförmig oder auch oval ausgebildeten Hauptgehäuse, während der von diesem ausgehende und üblicherweise einstückig an die Kunststoffschalen des Hauptgehäuses angesetzte Handgriff elektrische Schaltmittel, Verdrahtungen, Steuerbausteine für Drehzahl, Ein- und Ausschalten bzw. Drehrichtungsumkehr enthält, meistens aber über vergleichsweise viel freien Raum verfügt, während die restlichen Komponenten des Elektrohandwerkzeugs im horizontal verlaufenden Hauptgehäuse eher gedrängt angeordnet sind. Eine solche Anordnung der Gerätekomponenten hat auch insofern gute Gründe, als die Gleichachsigkeit von Antriebsmotorwelle und Werkzeugspindel den Getriebeaufbau scheinbar vereinfacht,und das kräftig gebaute Hauptgehäuse, welches üblicherweise aus einem Spritzgußteil aus geeignetem harten Kunststoff besteht, kann auch Lagerteilaufgaben für Werkzeugwelle, Getriebe und Antriebsmotor übernehmen. Es ist in diesem Zusammenhang auch bekannt, Bereiche des Hauptgehäuses anstelle von bestimmten Motorteilen zu verwenden, beispielsweise auf eines oder beide Motorschilder zu verzichten und gegebenenfalls den Rotor unmittelbar in Lagerausnehmungen des Hauptgehäuses unterzubringen. Dabei können Elektrohandwerkzeuge dieser allgemeinen Pistolengriffform aus zwei gleichen Halbschalen bestehen, wobei in eine erste Halbschale die einzelnen Gerätekomponenten vormontiert eingesetzt werden, während die zweite Halbschale dann als Abschlußdeckel dient. Es ist aber auch bekannt, insbesondere bei Profigerä ten, das Hauptgehäuse als einheitliches geschlossenes Rohrteil aus einem Stück zu fertigen.

Der Nachteil, der sich bei Elektrohandwerkzeugen mit diesem Aufbau ergibt, liegt darin, daß die Hand des Benutzers notwendiger- und sinnvollerweise das Werkzeug an seinem hinteren Ende dort ergreift, wo der Pistolengriff im stumpfen oder rechten Winkel abgeht, so daß das Werkzeug aufgrund des erheblichen Gewichts im horizontalen Hauptgehäuse um den Griffteil ein Drehmoment entwickelt und die Tendenz hat, nach vorne abzukippen. Der Benutzer eines solchen Werkzeugs ist daher genötigt, dieses beim Arbeiten waagerecht zu halten gegen das ständige Kippmoment nach unten, so daß rasche Ermüdungen im Handgelenk des Benutzers auftreten und man daher auch schon versucht hat, bei besonders schweren Maschinen am vorderen Ende im Bereich des Werkzeughalses einen quer wegstehenden Handgriff anzuordnen, so daß es möglich ist, das Gerät mit beiden Händen zu handhaben.

Eine solche beidhändige Arbeitsweise ist aber bei Schraubern oder sonstigen leichteren Geräten ungewöhnlich, auch deshalb, weil die Bedienungsperson in der freien Hand üblicherweise einen Schraubenvorrat hält, um bei schneller Arbeitsweise nach dem Einschrauben einer Schraube die nächste Schraube auf dem Werkzeug mit aufzusetzen und die Schraube einzuschrauben.

Ein weiterer Nachteil bei den bekannten Pistolengriff-Elektrohandwerkzeugen besteht üblicherweise darin, daß das horizontal verlaufende Hauptgehäuseteil häufig sehr lang baut bzw. bauen muß, damit alle Komponenten untergebracht werden können, obwohl im Handgriff an sich hinreichend Platz ist - dieser andererseits aber nicht kleiner gestaltet werden kann, da er mindestens so groß sein muß, daß er sicher von der Hand des Benutzers umfaßt werden kann. Es ergeben sich unvermeidbar Nachteile hinsichtlich der optimalen Raumausnutzung. Die Geräte sind üblicherweise größer als dies im Hinblick auf den tatsächlich zur Verfügung stehenden umschlossenen Raum erforderlich wäre.

Der Erfindung liegt daher die Aufgabe zugrunde, bei einem Elektrohandwerkzeug in Pistolengriffform dafür zu sorgen, daß dieses einwandfrei und ohne Entwicklung eines Kippdrehmoments in der Hand liegt bei gleichzeitiger optimaler Ausnutzung des zur Verfügung stehenden Raumes.

### Vorteile der Erfindung

Die Erfindung löst diese Aufgabe mit den kennzeichnenden Merkmalen des Anspruchs 1 und hat den Vorteil, daß es aufgrund der Anordnung des Antriebsmotors im Handgriff möglich ist, die Außenabmessungen des Geräts bei gleicher Ausstattung und Leistung erheblich zu reduzieren, was nicht nur einen wesentlich geringeren Raumbedarf bedeutet, sondern bei gleichzeitiger optimaler Ausnutzung des zur Verfügung stehenden Raums Montageund Herstellungskosten, auch hinsichtlich des Umfangs des benötigten Materials erheblich reduziert.

Ein weiterer wesentlicher Vorteil bei vorliegender Erfindung liegt darin, daß der Benutzer dann, wenn er den Handgriff des pistolenartig ausgebildeten Geräts erfaßt, praktisch das gesamte Gewicht des Geräts von ihm umfaßt wird, so daß er zusätzlich zu dem ohnehin von seiner Hand und seinem Arm zu tragenden Gewicht nicht noch ständig gegen das auch im Ruhezustand von einem solchen Pistolengriff-Gerät entwickelte Kippmoment nach vorne unten ankämpfen muß.

In einer Ausgestaltung der Erfindung wird dieser Umstand noch dadurch optimiert, daß es problemlos möglich ist, oberhalb des im Handgriff - Teilgehäuse untergebrachten Antriebsmotors die ebenfalls ein erhebliches Gewicht aufweisenden sonstigen Getriebeteile, insbesondere für die Drehmomentumlenkung, unterzubringen, so daß auch das Getriebegewicht in der vertikalen Achse nach unten vollständig kippmomentfrei wirkt, was eine besonders leichte und unproblematische Handhabung des Geräts sicherstellt.

Ein solcher Geräteaufbau ist insbesondere für einen Schraüber günstig, weil der Benutzer nicht ständig zwischen den verschiedenen einwirkenden Kräften balancieren muß und ferner in der Lage ist, aufgrund des sehr kurz und leicht bauenden horizontal verlaufenden Gehäuseteils, in welchem die Werkzeugspindel gelagert ist, auch sehr nahe an den eigentlichen Arbeitsort heranzukommen, so daß eventuelle Verkantungen, die beim Arbeiten unbewußt auftreten, nicht sofort zu einem Schiefziehen der zu setzenden Schraube führen.

Vorteilhaft ist ferner, daß die unmittelbare Nähe des Antriebsmotors zu den naturgemäß dem Handgriff-Gehäuseteil zugeführten elektrischen Leitungen bzw. den im Handgriff-Gehäuseteil an geeigneter Stelle untergebrachten Akkumulatoren oder Batterien längere Verdrahtungen überflüssig machen; insbesondere ist es auf diese Weise möglich, mit hoch integrierten Schaltkreisen, die geringsten Raum einnehmen, unmittelbar die elektrischen Verbindungen zum Antriebsmotor herzustellen, wobei eine besonders geeignete Ausgestaltung vorliegender Erfindung darin besteht, den Antriebsmotor so auszubilden, wie dies in dem deutschen Gebrauchsmuster G 89 08 646.5, dessen Priorität beansprucht ist, beschrieben ist.

Bei diesem Elektroantriebsmotor ist ein die Kohlebürsten und ihre Halterungen tragender, um vorgegebene Winkelbeträge relativ verdrehbarer Schaltring vorgesehen, der in den Schwenkendlagen die Feldwicklungen des Stators und die Ankerwicklungen jeweils unterschiedlich gepolt zur Drehrichtungsumkehr schaltet, in einer mittleren Position die ausgeschaltete Stellung des Antriebsmotors markiert und mit einem äußeren, manuell betätigbaren Stellring am Handgriff-Gehäuseteil verbunden ist.

Hierdurch ist es möglich, durch die Verdrehung einer Art Rotationsschalter am Handgriff des Geräts gleich zeitig dessen elektrische Funktionen zu bestimmen und vorzugeben, gegebenenfalls ergänzt durch weitere Schalter oder Rändelrad-Potentiometer zur Drehzahlsteuerung.

Durch weitere in den Unteransprüchen aufgeführte Maßnahmen sind ebenfalls vorteilhafte Weiterbildungen und Verbesserungen des im Anspruch 1 angegebenen Elektrohandwerkzeugs möglich.

Besonders vorteilhaft ist die Anordnung eines drehbar gelagerten Kegelrads oberhalb des nach außen ragenden Wellenstummels des Antriebsmotors, so daß beide miteinander kämmen und wobei das Kegelrad gleichzeitig in einer axial-horizontalen Richtung einen weiteren Zahnkranz auf seiner Stirnseite trägt, der insoweit Kupplungsklauen bildet, die mit einem axial verschiebbaren zweiten Kupplungsteil je nach der axial verschiebbaren Position der Werkzeugspindel zu deren Drehmitnahme in Wirkverbindung treten.

Schließlich ist vorteilhaft, daß der im Pistolenhandgriff angeordnete Antriebsmotor ein in sich vollkommen abgeschlossenes und unabhängiges Aggregat darstellt, mit eigener Lagerung der Rotorwelle auf beiden Seiten in jeweils einem A- und B-Lagerschild, die über Spannmittel zusammengehalten sind und zwischen sich das Statorpaket zentrieren. Insofern geht die Erfindung gegenüber den bisherigen Entwicklungen auf diesem Gebiet einen umgekehrten Weg, der jedoch eine Vielzahl von Vorteilen erbringt, indem das Gehäuse von Lager und Zentrieraufgaben für entsprechende Gerätekomponenten, auch Getrie be und dergl. entlastet wird und jedenfalls der Antriebsmotor als vollständig vormontierte,justierte und unabhängige Einheit in das Handgriff-Gehäuseteil eingebracht wird. Es ist daher auch möglich, jedenfalls dieses Gehäuseteil rohrförmig geschlossen auszubilden und den Antriebsmotor bis zum Anschlag einzuschieben, in welcher Position der Ausgangswellenstummel des Antriebsmotors in Wirkverbindung mit dem oberhalb des Motors angeordneten Kegelrad gelangt.

Zeichnung

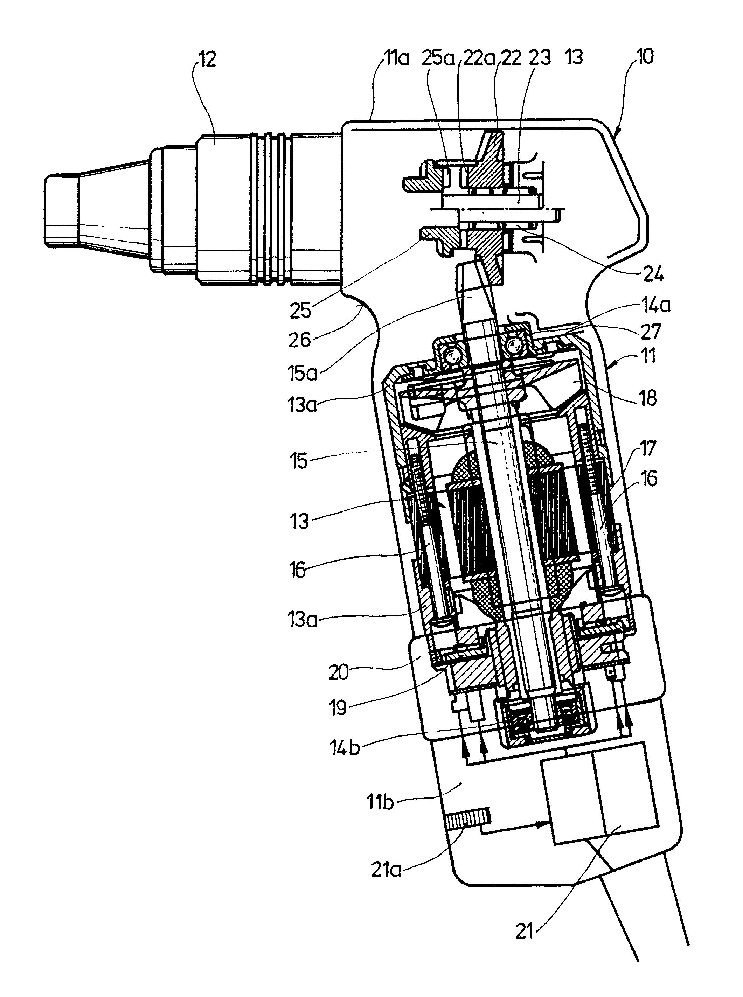

Ausführungsbeispiele der Erfindung sind in der Zeichnung dargestellt und werden in der nachfolgenden Beschreibung näher erläutert. Die Zeichnung zeigt schematisiert im Schnitt ein Elektrohandwerkzeug mit Antriebsmotor im Handgriff-Gehäuseteil in der bevorzugten Ausführungsform eines Schraübers.

Beschreibung der Ausführungsbeispiele

Der Grundgedanke vorliegender Erfindung besteht darin, die bisherige Bautendenz bei Elektrohandwerkzeugen sozusagen umzukehren und bei Anordnung des Antriebsmotors im Handgriff-Gehäuseteil den weiter bei dieser üblichen Bauart eines Pistolengriff-Elektrohandwerkzeugs horizontal verlaufenden Gehäuseteil in den Abmessungen klein und eher zierlich zu halten, so daß sich praktisch die gesamten Arbeitskomponenten des Elektrohandwerkzeugs im Handgriff-Gehäuseteil versammeln und dessen horizontaler schmaler, nach vorn gerichteter Ansatz als zweiter Gehäuseteil lediglich dazu dient, die Werkzeugspindel des Geräts zu lagern, gegebenenfalls einige weitere Getriebeteile, auch zur Drehmomentbegrenzung oder ähnlichem,aufzunehmen.

In der Zeichnung ist das Elektrohandwerkzeug als Schrauber 10 dargestellt, obwohl es sich versteht, daß das Grundprinzip vorliegender Erfindung auch auf andere Elektrohandwerkzeuge mit unterschiedlichen Funktionen anwendbar ist, die die übliche Pistolenhandgriffform aufweisen wie Handbohrmaschinen, Schlagbohrer u. dgl.

Der Hauptbestandteil des Gehäuses ist hier ein im wesentlichen rohrförmig-zylindrisches Handgriff-Gehäuseteil 11, welches an seinem oberen Endbereich einen Kopfteil 11a bildet, von dem in horizontaler Richtung in der Zeichenebene nach links ein weiteres, falls gewünscht auch einstückiges Gehäuseteil 12 ausgeht, welches wenig mehr als einen Ansatz des Kopfteils 11a bildet und hauptsächlich dazu dient, das zweite Lager für die Werkzeugspindel 13 zu bilden, die in der Zeichnung lediglich mit ihrem rechten Endbereich angedeutet dargestellt ist sowie ferner,falls gewünscht,einen einstellbaren Tiefenanschlag für die jeweilige Schraubtiefe.

Der in das Handgriffgehäuseteil 11 eingeschobene elektrische Antriebsmotor ist mit 13 bezeichnet; er stellt ein in sich abgeschlossenes, selbsttragendes Aggregat dar mit beidseitigen Lagerschilden 13a, 13b, die die Rotorwellenlager 14a, 14b für die Rotorwelle 15 bil den. Die beiden Lagerschilde 13a, 13b sind über Spannschrauben 16 miteinander verspannt und nehmen zwischen sich den Stator 17 zentriert auf. Auf der zum Lüfterrad 18 entgegengesetzten Seite des Antriebsmotors 13 befindet sich eine um vorgegebene Winkelbeträge verdrehbare Bürstenträgerplatte 19; die Bürstenträgerplatte 19 ermöglicht in ihrer Ausbildung als Schaltring entsprechend der Beschreibung in dem erwähnten Gebrauchsmuster G 89 08 646.5 die Drehrichtungsumkehr des Elektromotors durch Bürstenverstellung sowie das Ein/Ausschalten, so daß durch eine mechanische Verbindung zwischen dem Schaltring/Bürstenträgerplatte 19 und einem äußeren Stellring 20 die Einstellung der gewünschten elektrischen Funktion des Antriebsmotors möglich ist.

Der Stellring 20 ist bei dem dargestellten Ausführungsbeispiel außen am Handgriff-Gehäuseteil 11 des Elektrohandwerkzeugs gelagert; er kann beispielsweise in peripher umlaufenden Nuten geführt und gegen eine Axialverschiebung gesichert sein und steht mechanisch in Verbindung mit dem inneren Schaltring 19. Es ist daher möglich, den äußeren Stellring 20 durch Anordnung geeigneter Verrastungs- und Haltenasen am Handgriff-Gehäuseteil aufzurasten und hierdurch gleichzeitig die mechanische Verbindung mit einem durch eine Gehäuseausnehmung in Form eines Schlitzes ragenden Stellhebel herzustellen, der mit dem Schaltring 19 verbunden ist. Alternativ ist es aber auch möglich, den Stellring 20, der insofern einen Rotationsschalter bildet,als inneren,auch nur teilweisen Ring im Handgriff-Gehäuseteil zu lagern und seine Betätigung durch einen Schlitz von außen zu ermöglichen. Hierdurch gelingt es auch, den Handgriff von sonstigen, nach außen ragenden Schaltelementen freizuhalten, beispielsweise Ein/Ausschalter u. dgl., die leicht als störend empfunden werden könnten.

Im unteren freien Raum 11b des Handgriff-Gehäuseteils 11 können, falls gewünscht, weitere elektrische Schaltungskomponenten angeordnet sein, beispielsweise eine Drehzahlsteuerschaltung 21, falls weiter gewünscht mit von außen betätigbarem Stellpoti 21a.

Die nach oben mit einem Wellenstummel 15a nach außen ragende Rotorwelle 15 kämmt mit einem Kegelrad 22 eines Umlenkgetriebes; das Kegelrad 22 ist drehbar, jedoch axial unverschieblich zweckmäßigerweise über ein geeignetes Lager (Nadellager 23) auf dem rückwärtigen Teil der Werkzeugspindel 13 gelagert. Die Werkzeugspindel 13 ist selbst über ein weiteres ortsfestes Lager 24, welches ebenfalls ein Nadellager sein kann, gelagert, jedoch axial verschieblich angeordnet, wobei die beiden jeweiligen axialen Endpositionen in der Zeichnung ober-und unterhalb der Werkzeugspindel-Mittellinie erkennbar sind. Diese Ausführungen treffen speziell eine Schrauberausbildung, bei der ein erstes Kupplungsteil 25 drehfest und auch axial unverrückbar mit der Werkzeugspindel 13 verbunden ist, so daß dann, wenn die Werkzeugspindel durch Ansetzen einer Schraube gegen eine entsprechende Federvorspannung nach hinten gedrückt wird, dieser Kupplungsteil 25 mit seinem nach hinten gerichteten Klauenring 25a in Wirkverbindung gerät mit einem Gegenklauenring 22a als einstückiger Bestandteil des Kegelrads 22. Auf diese Weise wird die mechanische Wirkverbindung zwischen der Antriebsmotor-Ausgangswelle und der Werkzeugspindel hergestellt.

Es versteht sich, daß es sich hier lediglich um eine mögliche Ausführungsform der Erfindung handelt, die speziell auf eine Schraüberfunktion zugeschnitten ist und bei der das oberhalb des Antriebsmotors im Handgriff-Gehäuseteilkopf 11a angeordnete Umlenkgetriebe gleichzeitig in entsprechender Erweiterung als Trennkupplung für die Schraüberfunktion eingesetzt ist. Weitere Ausgestaltungen sind hier möglich; insbesondere kann in dem horizontal verlaufenden Gehäuseansatz 12 als zweiter Gehäuseteil noch ein Untersetzungsgetriebe angeordnet sein, falls das Elektrohandwerkzeug 10 als Handbohrmaschine eingesetzt ist - es ist auch möglich, im Bereich des Umlenkgetriebes noch Schlagbohrfunktionen zu integrieren.

Man erkennt, daß der Hauptgehäuseteil bei dem Elektrohandwerkzeug vorliegender Erfindung tatsächlich der Handgriff ist, dessen oberer Kopfteil 11a so (einstückig) mit dem den Antriebsmotor 13 lagernden Rohrteil verbunden ist, daß sich geeignete, nach innen gewölbte Nischen oder Stützflächen 26 im Übergang ergeben, die besonders einem starken Andrücken des Werkzeugs oder Schraübers dienen, ohne daß die Hand des Benutzers abrutscht. Diese Haltenischen 26 sind dabei auch so hoch im Übergang zwischen Handgriff-Gehäuseteil und dessen Kopf angeordnet, daß die übertragene Kraft praktisch in der Ebene der gewünschten Schraubwirkung ausgeübt wird.

Es versteht sich, daß im Handgriff-Gehäuseteil innen geeignete Querwände, Arretiernasen, Rippen u. dgl. angeordnet sind, von denen lediglich eine bei 27 gezeigt ist und die dazu dienen, den Antriebsmotor axial und radial im Handgriff-Gehäuseteil zu sichern.

Es können alle in der Beschreibung, den Ansprüchen und der Zeichnung dargestellten Merkmale sowohl einzeln für sich als auch in beliebiger Kombination miteinander erfindungswesentlich sein.

## Ansprüche

1. Elektrohandwerkzeug, insbesondere Schraüber, Handbohrmaschine, Schlagbohrer oder Schlaghammer, dessen Gehäuse aus einem Pistolenhandgriff und einem daran im Winkel (einstückig) angesetzten, die Werkzeugspindel aufnehmenden weiteren Gehäuseteil besteht, ferner mit einem aus Stator, Lagerschilden und Rotor mit Rotorwelle bestehenden Antriebsmotor für die Werkzeugspindel, dadurch gekennzeichnet, daß der Antriebsmotor (13) innerhalb des den Pistolenhandgriff bildenden Gehäuseteils (11) aufgenommen ist und zwischen dem Antriebsmotor-Ausgangswellenstummel (15a) und der Werkzeugspindel (13) ein das abgegebene Drehmoment um ca. 90° umlenkendes Getriebe (22) angeordnet ist.

2. Elektrohandwerkzeug nach Anspruch 1, dadurch gekennzeichnet, daß das Handgriff-Gehäuseteil (11) aus einem rohrförmig/zylindrischen Hauptteil und einem an dieses oben einstückig angesetzten Kopf (11a) besteht, in welchem das Umlenkgetriebe (15a, 22) angeordnet ist, derart, daß im wesentlichen das gesamte Gewicht des Elektrohandwerkzeugs frei von einer Kippmomentwirkung im Handgriffbereich konzentriert ist.

3. Elektrohandwerkzeug nach Anspruch 1 oder 2, dadurch gekennzeichnet, daß vom Kopf (11a) des Handgriff-Gehäuseteils (11) horizontal ausgehend ein den weiteren Gehäuseteil (12) bildender Ansatz vorgesehen ist, der über die Ebene des Handgriff-Gehäuseteils (11) hinaus ein erstes Lager für die Werkzeugspindel (13) bildet, deren zweites Lager im Bereich des Umlenkgetriebes (15a, 22) angeordnet ist.

4. Elektrohandwerkzeug nach einem der Ansprüche 1-3, dadurch gekennzeichnet, daß das Umlenkgetriebe von einem Kegelrad (22) gebildet ist, welches mit dem schräg im stumpfen Winkel zugeführten Wellenstummel (15a) der Rotorwelle (15) des Antriebsmotors (13) kämmt und seinerseits das aufgenommene Drehmoment zur Werkzeugspindel (13) weiterleitet.

5. Elektrohandwerkzeug nach einem der Ansprüche 1-4, dadurch gekennzeichnet, daß der Antriebsmotor ein eigenes Gehäuse (beidseitige Lagerschilde 13a, 13b) aufweist mit den von der Rotorwelle (15) getragenen Rotor zentrierenden beidseitigen Lagern (14a, 14b) und gegen axiale und radiale Anschläge zur Sicherung gegen Verschiebungen in diesen Richtungen in die innere Rohrform des Handgriff-Gehäuseteils (11) eingelegt bzw. eingeschoben ist.

6. Elektrohandwerkzeug nach Anspruch 5, dadurch gekennzeichnet, daß der Elektromotor einen inneren, die Bürsten tragenden Schaltring (19) aufweist, der mit einem äußeren Schaltring am Handgriff-Gehäuseteil (20) in mechanischer Drehverbindung steht derart, daß durch Verdrehen des äußeren Stellrings (20) die Drehrichtung und/oder der Ein/Ausschaltmechanismus des Antriebsmotors betätigbar ist.

7. Elektrohandwerkzeug nach einem der Ansprüche 1-6, dadurch gekennzeichnet, daß in der Form eines Schraubers das Kegelrad (20) als Hauptgetriebeteil des Umlenkgetriebes gleichzeitig Teil einer axialen Trennkupplung (Klauenkupplung 22, 25) für die Werkzeugspindel (13) ist, die drehfest und axial unverschieblich bei eigener axialer Verschiebbarkeit gegen Federspannung ein erstes Kupplungteil (25) mit Klauenzahnring (25a) lagert, der einem entsprechenden Klauenzahnring (22a) am Kegelrad (22) gegenüber liegt.

8. Elektrohandwerkzeug nach einem der Ansprüche 1-7, dadurch gekennzeichnet, daß im unteren Bereich des Handgriff-Gehäuseteils elektrische Schaltungen und Verdrahtungen unmittelbar angrenzend an den Bürstenbereich des Antriebsmotors (13) angeordnet sind.